**Europäisches Patentamt**

**European Patent Office**

**Office européen des brevets**

(19)

(11) Numéro de publication : **0 288 361 B1**

(12)

# FASCICULE DE BREVET EUROPEEN

(45) Date de publication du fascicule du brevet :
**27.12.91 Bulletin 91/52**

(51) Int. Cl.$^5$ : **F22B 37/20, F28F 9/00**

(21) Numéro de dépôt : **88400906.9**

(22) Date de dépôt : **14.04.88**

(54) **Dispositif de calage antivibratoire de tubes d'un générateur de vapeur et barres antivibratoires correspondantes.**

(30) Priorité : **21.04.87 FR 8705630**

(43) Date de publication de la demande :
**26.10.88 Bulletin 88/43**

(45) Mention de la délivrance du brevet :
**27.12.91 Bulletin 91/52**

(84) Etats contractants désignés :
**BE DE ES GB**

(56) Documents cités :
**FR-A- 2 558 933**
**GB-A- 900 078**
**GB-A- 2 164 803**
**US-A- 2 735 658**

(73) Titulaire : **FRAMATOME**
**Tour Fiat 1, Place de la Coupole**
**F-92400 Courbevoie (FR)**

(72) Inventeur : **Falduti, Claude**
**66 rue De Lierre**
**F-91240 Saint Michel sur Orge (FR)**

(74) Mandataire : **Bouget, Lucien et al**
**Cabinet Lavoix 2, Place d'Estienne d'Orves**
**F-75441 Paris Cédex 09 (FR)**

## Description

L'invention concerne un dispositif de calage anti-vibratoire de tubes du faisceau d'un générateur de vapeur d'un réacteur nucléaire à eau sous pression.

Les générateurs de vapeur des réacteurs nucléaires à eau sous pression comportent un faisceau constitué par un très grand nombre de tubes, généralement plusieurs milliers de tubes, pliés en U, de façon à présenter deux branches droites et un cintre de forme semi-circulaire reliant les deux branches droites. Les extrémités des parties droites des tubes sont fixées dans une plaque tubulaire et, constituent la partie inférieure du faisceau. Les parties cintrées juxtaposées des tubes constituent la partie supérieure ou chignon du faisceau tubulaire.

Les tubes du faisceau ne sont pas identiques entre eux, le rayon de courbure de la partie cintrée variant avec la position du tube dans le faisceau. De manière générale, les tubes situés à la partie centrale du faisceau ont un faible rayon de courbure et les tubes situés à la périphérie un grand rayon de courbure.

Ces tubes sont disposés suivant des plans verticaux parallèles entre eux séparés par une distance sensiblement constante correspondant à la distance séparant deux rangées successives de trous sur la plaque tubulaire.

Les parties droites des tubes sont maintenues dans la direction transversale, par des plaques entretoises percées d'ouvertures reproduisant sensiblement le réseau de trous traversant la plaque tubulaire. Les plaques entretoises sont fixées à leur périphérie sur une enveloppe cylindrique entourant le faisceau.

La partie supérieure des tubes du faisceau comportant des rangées successives de cintres séparées par une distance sensiblement constante comporte des éléments d'entretoisement et de calage disposés dans les espaces ménagés entre deux rangées successives de tubes.

Aussi bien les plaques entretoises assurant le maintien de la partie droite des tubes que les dispositifs de maintien des cintres dans le chignon doivent permettre un maintien efficace des tubes sans pour autant gêner la circulation de l'eau d'alimentation du générateur de vapeur au contact de la surface extérieure des tubes du faisceau. L'eau primaire sous pression de refroidissement du réacteur nucléaire circule à l'intérieur des tubes du faisceau du générateur de vapeur et permet l'échauffement et la vaporisation de l'eau d'alimentation circulant au contact de la surface externe des tubes.

La circulation à grande vitesse de courants de fluide au contact des tubes du faisceau se traduit par des sollicitations pouvant conduire à la mise en vibrations de ces tubes, dans le générateur de vapeur en service. Il peut en résulter une usure ou un endommagement des tubes au cours d'une utilisation de longue durée du générateur de vapeur.

Les plaques-entretoises assurent un maintien efficace des tubes dans les directions transversales, si bien que la partie droite du faisceau est peu sujette aux vibrations.

En revanche, la conception de dispositifs antivibratoires efficaces dans la partie supérieure ou chignon du faisceau est un problème difficile à résoudre.

On a proposé d'utiliser, pour assurer le maintien des cintres dans le chignon du faisceau, des barres antivibratoires qui sont disposées dans les espaces entre les rangées de tubes pour en assurer le calage.

Ces barres antivibratoires doivent présenter une épaisseur inférieure à la largeur des espaces séparant deux rangées de tubes successives pour qu'on puisse assurer leur introduction entre les rangées du chignon, sans difficulté, sans déplacer et sans détériorer les cintres entre lesquels on intercale les barres antivibratoires.

En outre, la prise en considération des tolérances de fabrication des tubes et des barres antivibratoires conduit à augmenter encore le jeu résiduel de montage des barres dans le chignon.

La présence de jeu relativement important entre les barres et les tubes se traduit par des vibrations en service qui s'accompagnent de chocs et de frottements générateurs d'usure et de détérioration des tubes.

Une usure excessive d'un tube du faisceau conduit à sa mise hors service, par exemple par bouchage de ses deux extrémités, pendant une période d'arrêt du réacteur nucléaire. De telles opérations de bouchage des tubes sont longues et coûteuses et conduisent à une diminution de la surface d'échange du générateur de vapeur, et de la pression de vapeur produite.

On a donc cherché à utiliser des barres antivibratoires plus efficaces pour effectuer le calage des tubes dans le chignon.

On a par exemple proposé d'utiliser des barres antivibratoires dilatables dans le sens de leur épaisseur et comportant une paire de tiges réglables reliées entre elles et qui peuvent être déplacées l'une par rapport à l'autre entre une première position dans laquelle la barre antivibratoire a une épaisseur inférieure à l'espace entre deux rangées successives de tubes et une seconde position dans laquelle la barre antivibratoire présente une épaisseur supérieure à celle qui correspond à la première position des tiges réglables.

Selon la demande de brevet Français n° 2.558.933, chaque paire de tiges réglables constituant une barre antivibratoire comprend des sections de tiges complémentaires ayant des zones de surface obliques placées face à face et qui forment des rampes longitudinales dont le déplacement relatif permet une dilatation transversale de la barre.

De tels dispositifs sont d'une réalisation complexe et nécessitent l'utilisation de moyens de manoeuvre pour déplacer l'une des sections de tiges comportant des rampes par rapport à l'autre.

Les barres antivibratoires peuvent être introduites relativement facilement à l'état non dilaté entre les rangées de tubes, mais il faut ensuite assurer la dilatation des barres en place dans le chignon, en manoeuvrant le dispositif de déplacement des tiges qui peut être constitué par exemple par un système vis-écrou. Cette manoeuvre nécessite une intervention dans une zone difficile d'accès du générateur de vapeur et qui de plus peut être soumise à des rayonnements ionisants si l'intervention doit être faite sur un générateur de vapeur ayant déjà fonctionné. Cette difficulté existe, dans tous les cas où l'on désire remplacer des barres anti-vibratoires non dilatables par des barres dilatables selon la technique connue, à actionnement mécanique.

De plus, ces barres à actionnement mécanique présentent l'inconvénient de nécessiter un mouvement longitudinal relatif d'une partie de la barre par rapport à l'autre, alors que les barres sont en place dans le chignon.

Le but de l'invention est donc de proposer un dispositif de calage antivibratoire de tubes d'un générateur de vapeur d'un réacteur nucléaire à eau sous pression, constitué par au moins une barre antivibratoire destinée à être intercalée entre deux rangées successives de tubes du générateur de vapeur, dans une zone où ces tubes ont la forme de cintres circulaires, la barre antivibratoire comportant deux pièces profilées de forme allongée assemblées de façon à présenter une certaine latitude de déplacement relatif, dans au moins une direction, ce dispositif étant à la fois efficace et d'une mise en oeuvre simple.

Dans ce but, les deux pièces profilées de forme allongée ménagent entre elles une pluralité de logements successifs dans leur direction longitudinale dans chacun desquels est placée une pièce en alliage à mémoire de forme intercalée entre les deux pièces profilées.

Afin de bien faire comprendre l'invention, on va maintenant décrire, à titre d'exemple non limitatif, en se référant aux figures jointes en annexe, plusieurs modes de réalisation de l'invention, dans le cas du calage antivibratoire des tubes d'un générateur de vapeur d'un réacteur nucléaire à eau sous pression.

La figure 1 est une vue générale en élévation avec coupe partielle d'un générateur de vapeur d'un réacteur nucléaire à eau sous pression.

La figure 2 est une vue latérale avec coupe partielle d'une partie de la longueur d'une barre antivibratoire selon l'invention.

La figure 3 est une vue à plus grande échelle d'une partie de la barre anti-vibratoire représentée sur la figure 2.

La figure 3a est une vue en coupe suivant 3A de la figure 3, la barre étant dans sa configuration dilatée.

La figure 3b est une vue en coupe suivant 3B de la figure 3, la barre étant dans sa configuration dilatée.

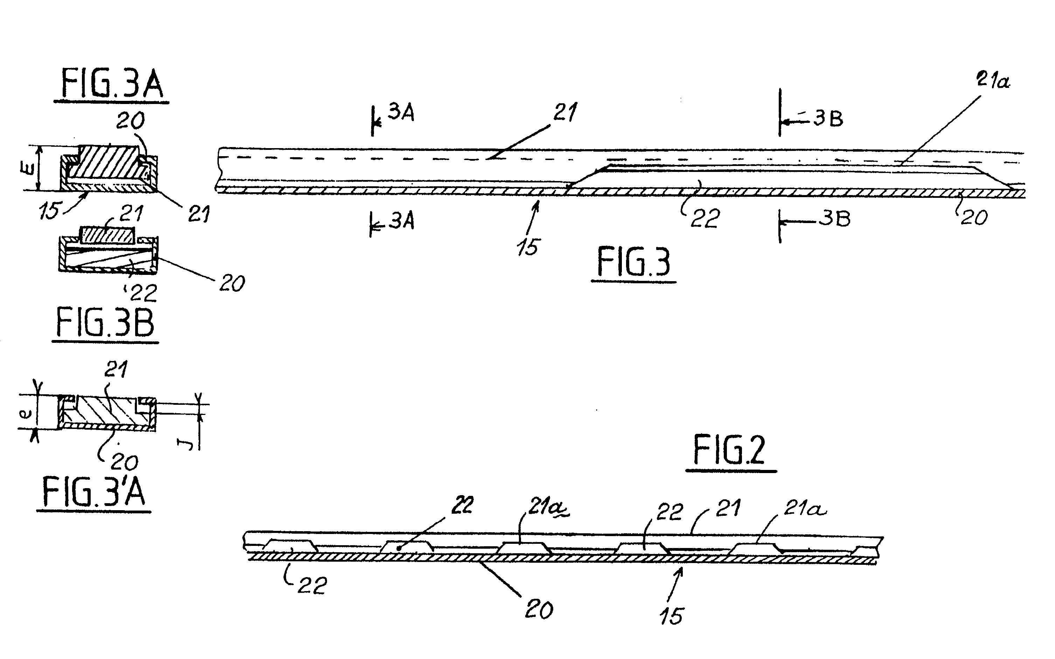

La figure 3'a est une coupe suivant 3A de la figure 3, la barre étant dans sa position non dilatée.

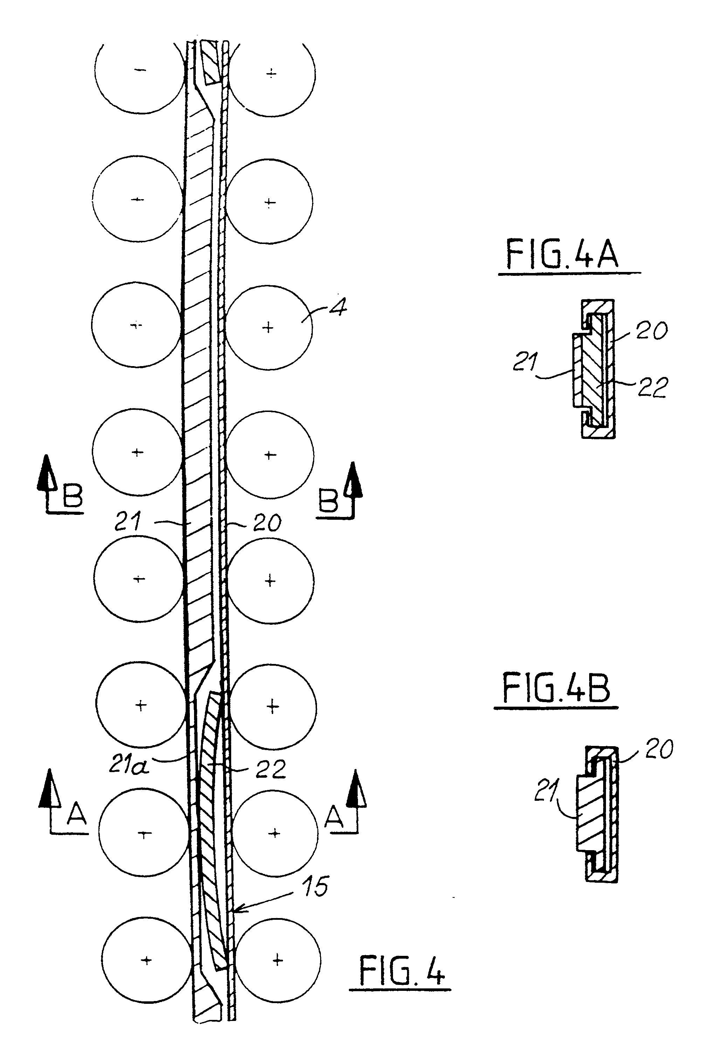

La figure 4 est une vue en coupe longitudinale d'une barre antivibratoire selon un premier mode de réalisation, au niveau de son dispositif d'actionnement comportant une pièce en alliage à mémoire de forme.

La figure 4a est une vue en coupe suivant AA de la figure 4.

La figure 4b est une vue en coupe suivant BB de la figure 4.

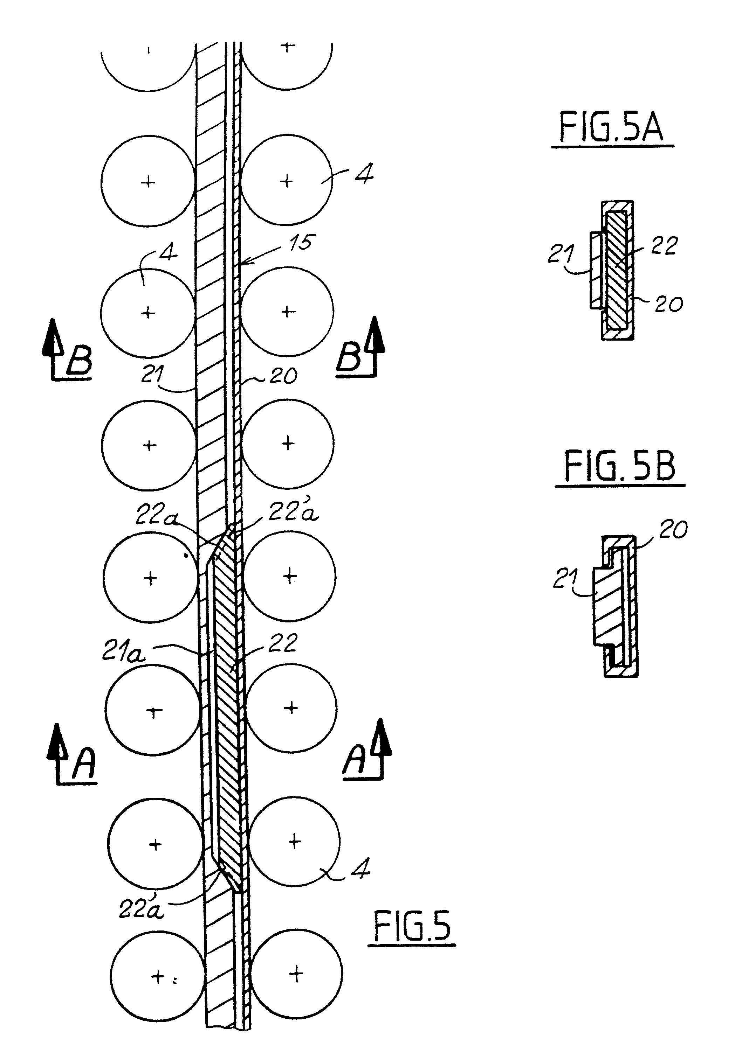

La figure 5 est une vue en coupe longitudinale d'une partie d'une barre antivibratoire selon un second mode de réalisation.

La figure 5a est une vue en coupe suivant AA de la figure 5.

La figure 5b est une vue en coupe suivant BB de la figure 5.

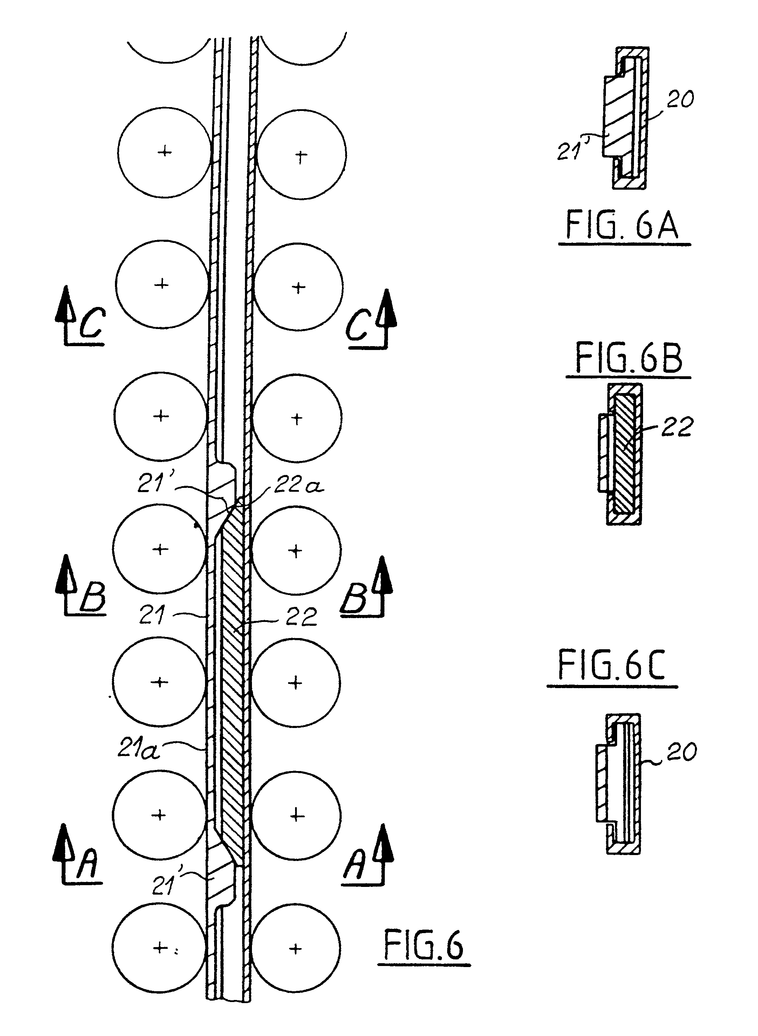

La figure 6 est une une vue en coupe longitudinale d'une partie d'une barre antivibratoire selon une première variante du second mode de réalisation.

La figure 6a est une vue en coupe suivant AA de la figure 6.

La figure 6b est une vue en coupe suivant BB de la figure 6.

La figure 6c est une vue en coupe suivant CC de la figure 6.

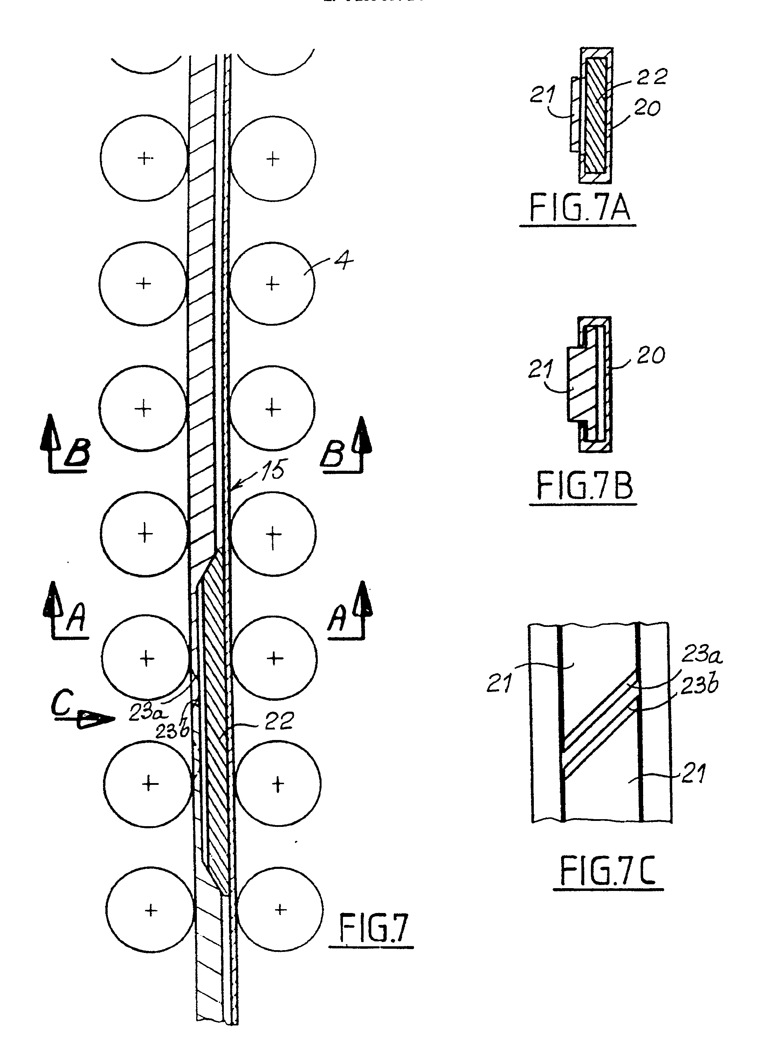

La figure 7 est une vue en coupe longitudinale d'une partie d'une barre antivibratoire selon le second mode de réalisation et selon une seconde variante.

La figure 7a est une vue en coupe suivant AA de la figure 7.

La figure 7b est une vue en coupe suivant BB de la figure 7.

La figure 7c est une vue latérale suivant C de la figure 7.

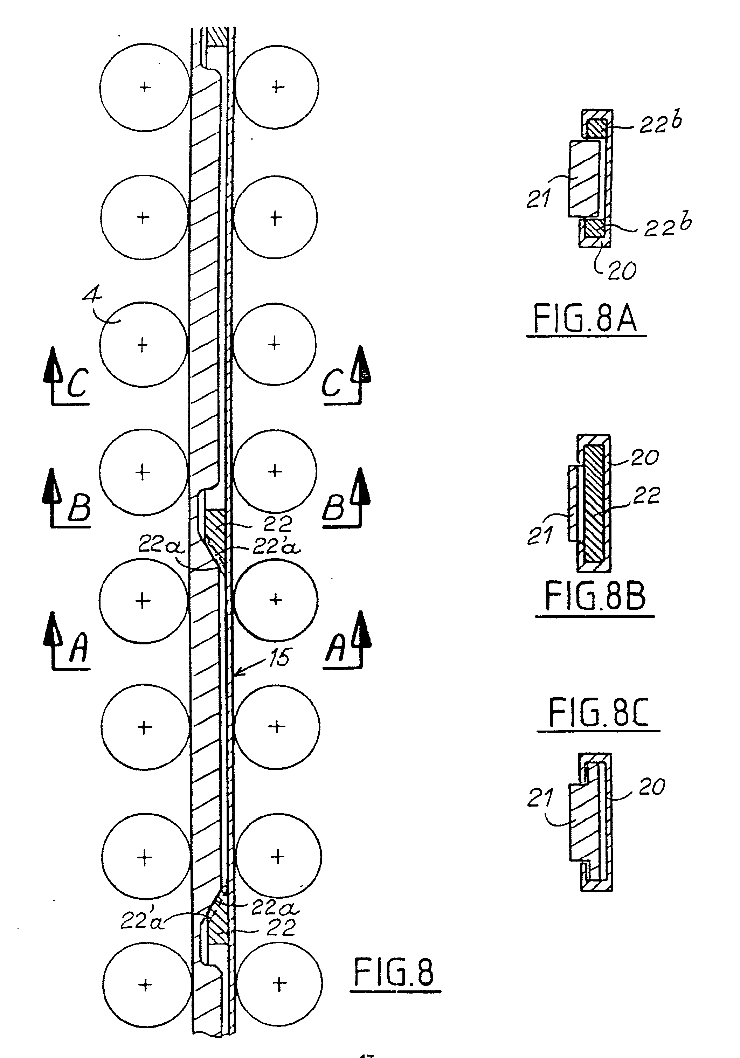

La figure 8 est une vue en coupe longitudinale d'une partie d'une barre antivibratoire selon un troisième mode de réalisation.

La figure 8a est une vue en coupe suivant AA de la figure 8.

La figure 8b est une vue en coupe suivant BB de la figure 8.

La figure 8c est une vue en coupe suivant CC de la figure 8.

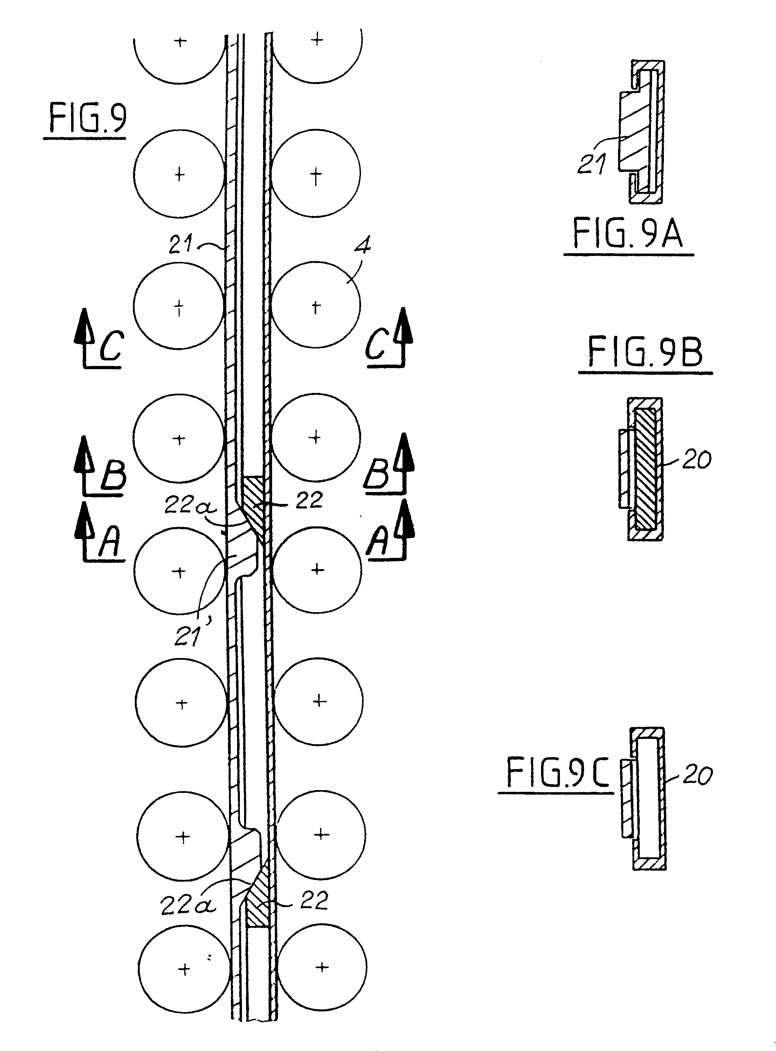

La figure 9 est une vue en coupe longitudinale d'une partie d'une barre antivibratoire selon le troisième mode de réalisation et suivant une première variante.

La figure 9a est une vue en coupe suivant AA de la figure 9.

La figure 9b est une vue en coupe suivant BB de la figure 9.

La figure 9c est une vue en coupe suivant CC de la figure 9.

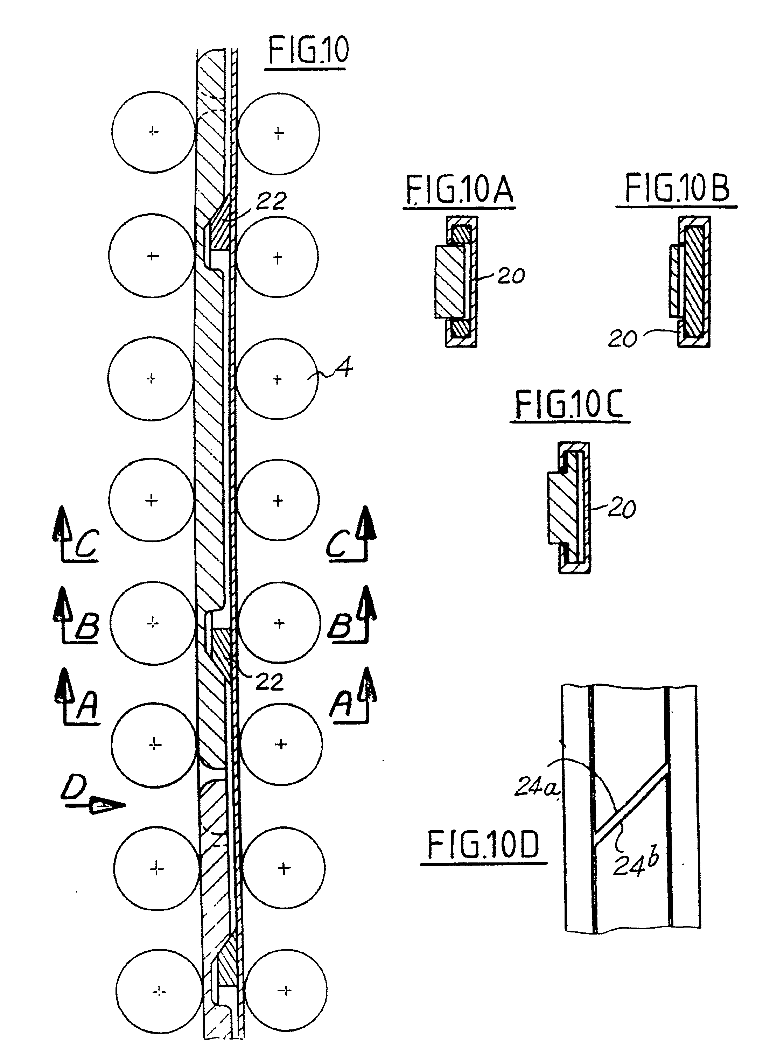

La figure 10 est une vue en coupe longitudinale d'une partie d'une barre antivibratoire suivant le troisième mode de réalisation et suivant une seconde variante.

La figure 10a est une vue en coupe suivant AA de la figure 10.

La figure 10b est une vue en coupe suivant BB de la figure 10.

La figure 10c est une vue en coupe suivant CC de la figure 10.

La figure 10d est une vue latérale suivant D de la figure 10.

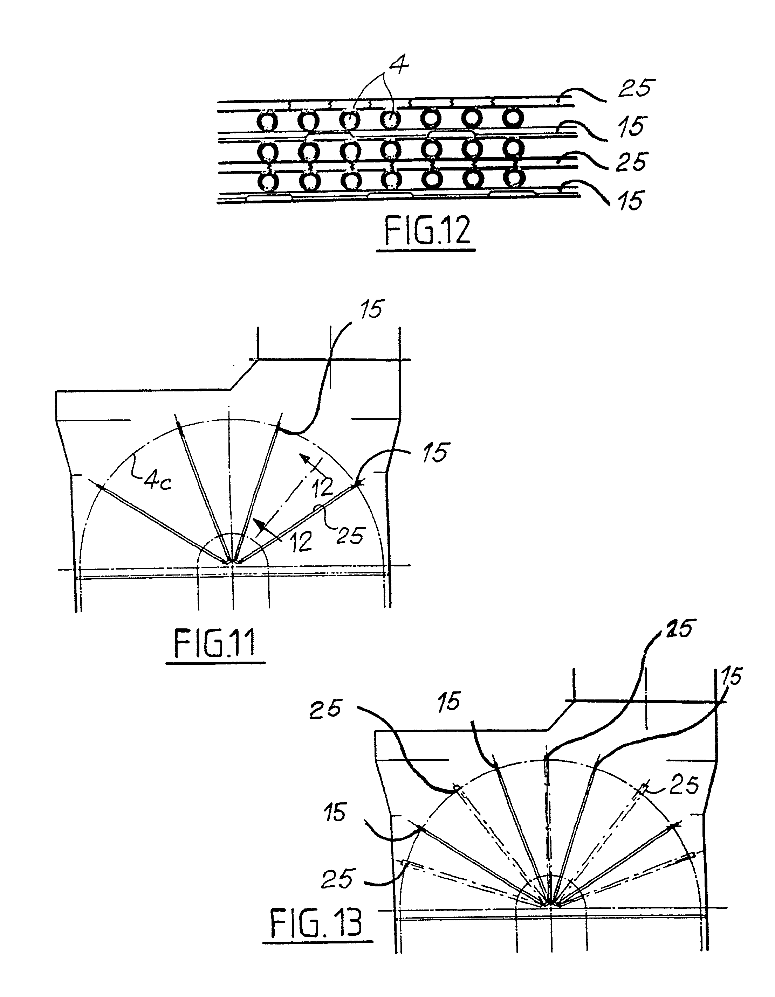

La figure 11 est une vue en élévation schématique montrant la position de barres antivibratoires suivant l'invention, dans le chignon d'un générateur de vapeur.

La figure 12 est une vue suivant 12-12 de la figure 11.

La figure 13 est une vue en élévation schématique montrant la position de barres antivibratoires selon l'invention dans le chignon d'un générateur de vapeur.

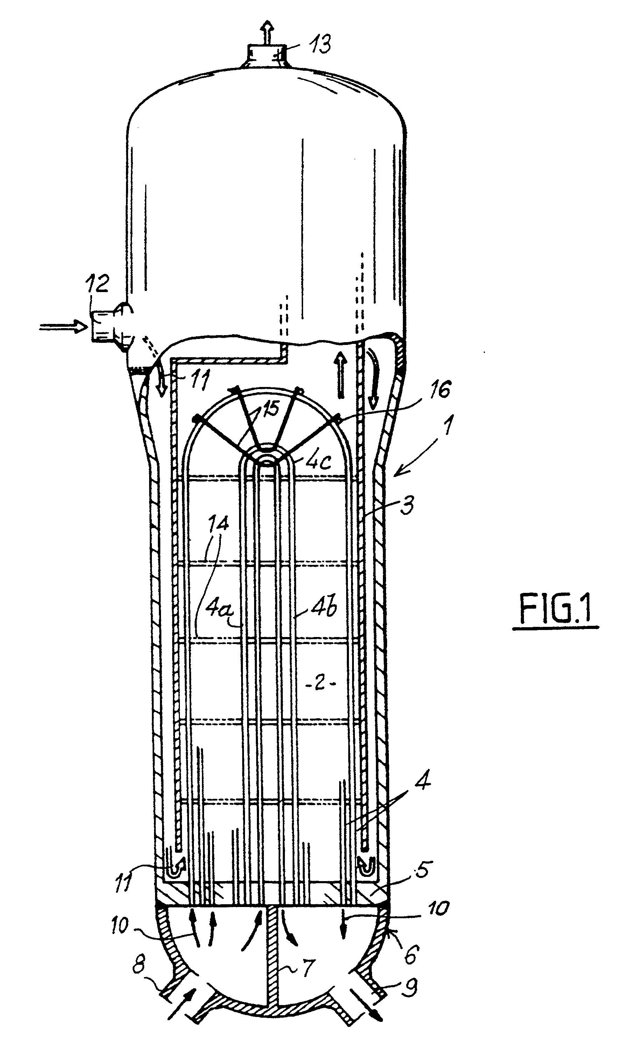

Sur la figure 1, on voit un générateur de vapeur comportant une enveloppe externe 1 dans laquelle est disposé un faisceau de tubes 2 à l'intérieur d'une enveloppe de faisceau 3. Les tubes 4 du faisceau 2 ont une forme de U et traversent par leurs extrémités une plaque tubulaire 5 dans laquelle ils sont fixés. La plaque 5 sépare la partie secondaire du générateur de vapeur, à l'intérieur de l'enveloppe 1, de la partie primaire constituée par la boîte à eau 6. La boîte à eau est séparée en deux parties par une cloison 7 et comporte une tubulaire d'entrée d'eau primaire 8 communiquant avec l'une des compartiments délimités dans la boîte à eau et une tubulure de sortie 9 d'eau primaire communiquant avec l'autre compartiment de la boîte à eau. Chacun des tubes 4 communique, par l'une de ses extrémités, avec l'un des compartiments de la boîte à eau et, par son autre extrémité, avec l'autre compartiment de la boîte à eau.

L'eau primaire chaude provenant de la cuve du réacteur nucléaire renfermant le coeur pénètre dans le compartiment d'entrée de la boîte à eau, puis dans les tubes 4 par leur extrémité d'entrée, pour circuler à l'intérieur de ces tubes puis ressortir dans le second compartiment de la boîte à eau, par l'extrémité de sortie des tubes 4 (flèches 10).

L'enveloppe 1 du générateur de vapeur est traversée par une tubulure 12 d'entrée d'eau d'alimentation et par une tubulure 13 de sortie de vapeur. L'eau d'alimentation (flèches 11) circule d'abord de haut en bas dans l'espace annulaire situé à la périphérie de l'enveloppe de faisceau 3, puis de bas en haut en contact avec les tubes du faisceau, l'eau d'alimentation étant alors échauffée puis vaporisée, par la chaleur de l'eau primaire circulant dans les tubes 4.

La vapeur formée au contact du faisceau 2 est évacuée par la tubulaire 13.

La circulation d'eau à grande vitesse au contact des tubes du faisceau 2 ainsi que les autres sollicitations subies par ces tubes en service dans le générateur de vapeur ont tendance à mettre les tubes en vibrations, en particulier dans des directions transversales horizontales perpendiculaires à l'axe vertical commun au générateur de vapeur et au faisceau 2.

Chacun des tubes du faisceau en U comporte deux branches verticales 4a et 4b et un cintre de forme semi-circulaire 4c. Les tubes 4 constituant une rangée du faisceau, comme il est visible sur la figure 1, comportent des cintres dont le rayon est décroissant, depuis la périphérie du faisceau jusqu'à la partie centrale.

Les branches droites 4a et 4b des tubes 4 sont maintenues contre les sollicitations transversales, par des entretoises 14 réparties suivant la hauteur du faisceau.

Les cintres 4c des tubes constituant des rangées successives sont séparées par un espace d'une largeur relativement faible dans la direction perpendiculaire au plan de la figure 1, cette distance étant approximativement constante d'une rangée de tubes à une autre.

Pour éviter la mise en vibrations des cintres 4c dans cette direction, on intercale, dans chacun des intervalles entre deux rangées, un jeu de barres antivibratoires 15 qui peuvent avoir avantageusement une forme de V dont le sommet est placé vers le centre du faisceau, c'est-à-dire vers les petits cintres 4c et dont les branches s'écartent vers l'extérieur du faisceau. Les barres antivibratoires 15 sont maintenues dans la partie supérieure du faisceau appelée chignon par des anneaux de maintien 16.

Selon l'invention, les barres antivibratoires 15 peuvent être réalisées, de manière avantageuse, de la façon qui sera décrite plus bas, le calage antivibratoire des cintres 4c des tubes du faisceau étant réalisé par le procédé selon l'invention.

La zone des cintres, au contact des tubes, est, pendant le fonctionnement du générateur de vapeur, à une température voisine de la température primaire, à savoir une température voisine de 300°C.

En se reportant aux figures 2 et 3, on va décrire de manière générale la réalisation d'une barre antivibratoire 15 suivant l'invention.

Sur la figure 2, on a représenté une portion longitudinale d'une telle barre 15 qui comporte deux parties profilées 20 et 21 assemblées entre elles de façon à garder une certaine latitude de déplacement dans la direction transversale et un ensemble de pièces 22 en alliage à mémoire de forme intercalées entre les parties 20 et 21 et régulièrement réparties suivant la longueur de la barre 15.

Sur les figures 2 et 3, les pièces en alliage à mémoire de forme 22 ont été représentées de façon schématique : leur réalisation précise selon plusieurs modes de réalisation et variantes fera l'objet d'une description précise en regard des figures 4 à 10.

Les éléments correspondants sur l'ensemble des figures portent les même repères.

La partie 20 de la barre antivibratoire est constituée par un profil creux dont la section est visible par exemple sur les figures 3a, 3b et 3'a. Cette section de forme globale rectangulaire est ouverte sur une partie d'un de ses côtés et sur toute la longueur du profilé.

Le profilé 21 a une section en forme de T dont la partie de plus grande largeur a une dimension un peu inférieure à la largeur maximum intérieure du profilé 20. La partie de faible largeur du profilé 21 a une dimension légèrement inférieure à l'ouverture dans le côté du profilé 20. Le profilé 21 est monté à l'intérieur du profilé 20 comme il est représenté sur les figures 3a et 3'a, de manière à pouvoir se déplacer dans une direction transversale du profilé 20, entre une position d'extraction comme représenté sur la figure 3a et une position rentrée comme représenté sur la figure 3'a.

Dans la position d'extraction du profilé 21, la barre antivibratoire est dans sa configuration dilatée et présente une épaisseur E.

Au contraire, dans la position rentrée du profilé 21, la barre 15 est dans sa configuration non dilatée et présente une épaisseur e comme représenté sur la figure 3'a. Entre sa position d'extraction et sa position rentrée, la partie 21 du profilé se déplace dans la direction transversale d'une distance J représentée sur la figure 3'a, par rapport à la partie 20.

Le profilé 21 présente, suivant sa longueur, des zones successives où sa section est réduite à sa partie de faible largeur de forme rectangulaire comme représenté sur la figure 3b. Il en résulte la présence d'échancrures 21a régulièrement espacées suivant la longueur de la barre 15, dans chacune desquelles est logée une pièce 22 en alliage à mémoire de forme intercalée entre les pièces 20 et 21 emboîtées l'une dans l'autre.

On rappellera ici qu'un alliage à mémoire de forme est un alliage pouvant présenter deux formes structurales différentes, par exemple une structure martensitique et une structure austénitique, le passage d'une structure à l'autre pouvant être obtenu par une élévation ou au contraire un abaissement de la température de l'alliage, de part et d'autre d'une plage de températures dans laquelle a lieu la transformation structurale de l'alliage.

L'une de ces deux phases qui est la phase martensitique dans le cas d'une transformation d'un état austénitique à un état martensitique présente une plus grande capacité de déformation que la seconde phase. L'alliage peut donc être facilement déformé, lorsqu'il est dans un premier état structural. Cependant, si l'on opère la transformation de l'alliage, par exemple par élévation de température pour passer de la structure martensitique à la structure austénitique, la pièce en alliage déformée à l'état martensitique retrouve sa forme d'origine à l'état austénitique.

On dit que l'alliage est à mémoire de forme puisque le passage d'une forme structurale à une autre, par exemple par élévation de température, lui permet de retrouver sa forme d'origine.

Dans le cas des barres antivibratoires suivant l'invention, la pièce 22 est en alliage à mémoire de forme, par exemple en un alliage nickel-titane subissant une transformation de type martensitique-austénitique dans un domaine de températures situé sensiblement en dessous de la température de service ts du générateur de vapeur et au-dessus d'une température ambiante normale, par exemple 20°C.

La pièce 22 possède une première configuration à la température ambiante, par exemple 20°C, cette configuration étant obtenue par déformation de la pièce à la température ambiante et à l'état martensitique.

La pièce 22 présente une seconde configuration qui peut être obtenue par passage de la température de cette pièce 22 au-dessus du domaine de transformation. Cette elévation de température peut être obtenue, par exemple, en élevant la température de la pièce 22 jusqu'à la température de service du générateur de vapeur.

On entend ici par configuration de la pièce 22, son état tel que défini par ses caractéristiques géométriques, c'est-à-dire sa forme et ses dimensions.

La seconde configuration de la pièce 22, c'est-à-dire la configuration obtenue à la température de service du générateur de vapeur sera telle que la pièce 22 intercalée entre les pièces profilées 20 et 21 produit une extraction de la pièce 21 par rapport à la pièce 20, comme représenté sur les figures 3a et 3b.

La première configuration est obtenue à partir de la seconde configuration de la pièce qui est la configuration à haute température, par déformation alors que la pièce est dans sa première forme structurale. Cette première configuration est telle que les pièces 20 et 21 entre lesquelles sont intercalées les pièces 22 peuvent être mises dans leur position rétractée comme représenté sur la figure 3'a.

L'épaisseur e de la barre antivibratoire dans la position rétractée des pièces 20 et 21 est inférieure à l'espace séparant les rangées de tubes 4, au niveau des cintres 4c.

Pour réaliser le calage des cintres 4c, en utilisant des barres antivibratoires suivant l'invention, on introduit, entre les rangées de cintres, des barres 15, de façon que leur épaisseur e soit disposée suivant la largeur de l'espace de séparation entre les rangées de cintres. Cette introduction est très rapide et très facile, le jeu de montage pouvant être fixé à une valeur relativement importante.

On effectue la fixation des barres antivibratoires, par exemple en utilisant des anneaux de fixation tels que les anneaux 16 représentés sur la figure 1.

Lors de la mise en service du générateur de vapeur, les tubes 4 et en particulier la région des cintres 4c sont portés à une température comprise entre la température de la vapeur saturante et la température primaire, c'est-à-dire une température de l'ordre de 300°C. Les barres antivibratoires 15 sont elles-mêmes portées à une température de l'ordre de 300°C qui est la température de service du générateur de vapeur à la sortie du faisceau.

A cette température de service ts, les pièces 22 en alliage à mémoire de forme et les barres antivibratoires sont dans leur seconde configuration telle que représentée sur les figures 3a et 3b. L'épaisseur E de la barre antivibratoire dans cette configuration est sensiblement supérieure à l'épaisseur e de la barre dans sa première configuration, l'épaisseur E étant généralement de l'ordre de la valeur maximale de l'espacement entre les rangées de tubes au niveau des cintres ou un peu supérieure.

Le montage des barres antivibratoires est donc réalisé de façon très facile et très rapide à la température ambiante et le calage antivibratoire est réalisé automatiquement au moment de la mise en service du générateur de vapeur.

Sur les figures 4 à 10, on a représenté plusieurs modes de réalisation et plusieurs variantes de la barre antivibratoire suivant l'invention qui diffèrent en particulier par les formes de réalisation données aux pièces d'actionnement 22 de la barre antivibratoire.

Sur les figures 4, 4a et 4b, on voit un premier mode de réalisation où les pièces 22 en alliage à mémoire de forme sont réalisées sous la forme de lames présentant une certaine courbure. Sur les figures, on a représenté la position de la barre antivibratoire 15 dans le générateur de vapeur en service. Les pièces 20 et 21 sont alors maintenues écartées par les pièces 22 agissant comme des ressorts à lame, si bien que ces pièces viennent au contact de la surface extérieure de tubes 4 disposés suivant deux rangées successives.

La première configuration de la pièce 22 est obtenue par déformation à température ambiante de cette pièce pour diminuer sa flexion. Lorsque les pièces 22 sont dans leur première configuration, les parties 20 et 21 de la barre antivibratoire 15 peuvent être rapprochées l'une de l'autre de façon que l'épaisseur totale de la barre dans la direction de la largeur de l'espace entre les rangées de tubes soit sensiblement inférieure à la largeur de cet espace. Les barres peuvent alors être introduites facilement entre les rangées de tubes.

Lorsque le générateur est mis en service, les barres 15 et les pièces 22 sont très rapidement portées à une température supérieure à la température de transformation de l'alliage à mémoire de forme. Les pièces 22 reprennent alors la courbure correspondant à leur état austénitique et provoquent la dilatation des barres comme représenté sur la figure 4.

Les pièces 22 ont une section transversale en forme de T, ce qui est préférable à une forme de lame à section rectangulaire, en particulier pour le montage des pièces 22 à l'intérieur des pièces profilées 20 et pour faciliter leur appui sur les pièces 21 au niveau des échancrures 21a.

Sur les figures 5, 5a et 5b, on a représenté un second mode de réalisation, les pièces 22 en alliage à mémoire de forme étant constituées sous la forme de lames parallélépipédiques dont les extrémités 22a sont inclinées par rapport aux faces de la lame 22. Les échancrures 21a de la pièce 21 comportent des parties d'extrémité présentant des rampes dont l'inclinaison correspond à l'inclinaison des parties 22a des pièces 22.

Sur les figures 5, 5a et 5b, les barres antivibratoires 15 ont été représentées dans leur configuration dilatée, à l'intérieur du générateur de vapeur en service. Les pièces 22 sont alors dans leur seconde configuration dans laquelle elles assurent l'écartement des pièces 20 et 21 par action de leurs rampes d'extrémité 22a sur les rampes correspondantes de la pièce 21.

La première configuration des pièces 22 est obtenue par compression dans le sens de leur longueur de ces pièces, à température ambiante, par exemple 20°C. Les pièces 22 ont alors la même forme que représentée sur la figure 5 mais une longueur plus faible. Dans cette configuration, les rampes 22a sont en retrait par rapport aux rampes de la pièce 21 représentées sur la figure 5 (positions 22'a) et la pièce 21 peut être rapprochée de la pièce 20 de façon que l'épaisseur totale de la barre 15 soit inférieure à l'espace entre les rangées de tubes 4.

Après mise en place des barres antivibratoires dans le générateur de vapeur à température ambiante, la mise en service du générateur de vapeur provoque l'élévation de la température des barres antivibratoires et des pièces 22, de façon que ces pièces reprennent leur seconde configuration telle que représentée sur la figure 5. On assure ainsi le calage antivibratoire des tubes 4, automatiquement, au moment de la mise en service du générateur de vapeur.

Les figures 6, 6a, 6b et 6c montrent une variante de réalisation des barres représentées aux figures 5, 5a et 5b, les pièces 22 étant réalisées sous la même forme et la pièce profilée 21 étant réalisée sous forme allégée. Cette pièce profilée 21 est réalisée sous la forme d'une lame plane de faible épaisseur comportant des parties 21' de faible longueur et en surépaisseur dans lesquelles sont usinées les rampes destinées à coopérer avec les rampes 22a des pièces 22 qui sont chacune disposée entre deux parties 21' en surépaisseur. La pièce 21 a une section profilée en forme de T comme il est visible sur la figure 6a, uniquement au niveau des parties en surépaisseur 21' qui assurent le montage et le maintien de la pièce 21 par rapport à la pièce 20 profilée et creuse.

Ce mode de réalisation permet d'obtenir des barres antivibratoires dont les parois de faible épaisseur venant en contact avec les tubes 4 sont légèrement flexibles. On obtient ainsi une plus grande souplesse lors du serrage et du calage des tubes 4, au moment de la mise en service du générateur de vapeur.

Sur les figures 7, 7a, 7b et 7c, on voit une barre antivibratoire 15 constituant une seconde variante de la barre représentée sur la figure 5. Les pièces 22 en alliage à mémoire de forme sont réalisées sous la même forme que dans le mode de réalisation de la figure 5 mais la pièce 21 est réalisée en plusieurs parties successives discontinues séparées par des surfaces en biseaux 23a, 23b. Les parties d'extrémité de la pièce 21 sont calées par des parties d'extrémité fermées de la pièce 20.

Les séparations entre les tronçons successifs suivant le sens de la longueur de la partie 21 sont disposées au niveau des pièces d'actionnement en alliage à mémoire de forme 22. Chacun des tronçons successifs de la pièce 21 comporte deux rampes inclinées en sens inverse et coopérant avec deux pièces 22 successives.

La forme de réalisation représentée sur les figures 7, 7a, 7b et 7c permet de faciliter le montage des barres antivibratoires et leur fonctionnement, au moment de la dilatation des barres, par écartement des pièces profilées 20 et 21, sous l'action des pièces 22, et de compenser localement les différences de diamètres des tubes.

Les figures 8, 8a, 8b et 8c représentent un troisième mode de réalisation des barres antivibratoires 15.

Dans ce mode de réalisation, les pièces 22 en alliage à mémoire de forme comportent chacune deux parties d'extrémité présentant des rampes 22a inclinées en sens inverse et dirigées l'une vers l'autre. Ces parties d'extrémité sont reliées par deux parties latérales 22b (figure 8a) qui assurent également la fixation de la pièce 22 à l'intérieur de la pièce profilée creuse 20.

Sur les figures 8, 8a et 8b, les pièces d'actionnement 22 en alliage à mémoire de forme ont été représentée dans leur seconde configuration, dans laquelle les rampes 22a coopèrent avec des rampes d'inclinaison correspondantes usinées sur la pièce 21, pour maintenir les pièces 21 et 22 écartées l'une de l'autre et la barre antivibratoire 15 dans sa position dilatée assurant le calage des tubes 4.

La première configuration des pièces 22 est obtenue, à température ambiante, en déformant la pièce 22 par traction longitudinale, à partir de la seconde configuration représentée sur la figure 8. Les rampes 22a viennent alors dans leur position 22'a, ce qui permet de rapprocher les pièces 21 et 20 et de diminuer l'épaisseur de la barre antivibratoire 15. Sous cette forme, la barre antivibratoire peut être facilement introduite entre les rangées de tubes 4.

Lors de la mise en service du générateur de vapeur, la barre 15 et les pièces 22 sont portées à une température supérieure à la température de transformation de l'alliage à mémoire de forme et les pièces 22 reprennent leur seconde configuration, mettant la barre 15 dans sa seconde configuration comme représenté sur la figure 8.

Sur les figures 9, 9a, 9b et 9c, on a représenté une variante du troisième mode de réalisation, la pièce 21 étant réalisée sous forme allégée et comportant une paroi mince, plane et flexible sur la plupart de sa longueur, à l'exception des zones 21' usinées en surépaisseur sur lesquelles sont prévues les rampes destinées à coopérer avec les rampes 22a des pièces d'actionnement 22. Les pièces 21 comportent également une section élargie en forme de T au niveau des zones 21', assurant ainsi le montage et le maintien des pièces 21 dans la pièce profilée creuse 20.

Sur les figures 10, 10a, 10b, 10c et 10d, on voit une seconde variante du troisième mode de réalisation, les pièces d'actionnement 22 en alliage à mémoire de forme étant réalisées sous la forme déjà décrite en se référant aux figures 8, 8a, 8b et 8c.

La variante consiste à réaliser la pièce 21 en plusieurs parties discontinues séparées par des surfaces en biseaux 24a et 24b. Les parties d'extrémité de la pièce 21 sont calées par les extrémités fermées de la pièce 20. Les surfaces de séparation en biseaux 24a, 24b des parties successives de la pièce 21 sont disposées au niveau des pièces d'actionnement à mémoire de forme 22.

Ce mode de réalisation permet de faciliter le montage et la mise en oeuvre au moment de l'actionnement de la barre antivibratoire et de compenser localement les différences de diamètres des tubes.

Sur les figures 11 et 12, on a représenté des barres antivibratoires 15 et 25 disposées entre les rangées de tubes 4 d'un générateur de vapeur, au niveau des cintres 4c constituant le chignon.

Les barres 15 qui sont disposées dans un espace de séparation des rangées de tubes 4 sur deux sont des barres expansibles comportant des pièces en alliage de forme suivant l'invention.

Au contraire, les barres 25 ne sont pas expansibles. Ces barres 25 peuvent être des barres métalliques pleines comme il est bien connu dans l'art antérieur.

Selon une variante de la présente invention et, afin d'adapter l'ensemble des barres anti-vibratoires pour compenser les différences de diamètres extérieurs des tubes constituant le faisceau, les barres 25 sont des barres élastiques évidées pouvant subir des déformations importantes au droit des tubes 4 dont elles assurent le maintien antivibratoire. Ces barres 25 peuvent subir des déformations élastiques variables, lorsque les barres 15 suivant l'invention sont mises dans leur position dilatée. Ces déformations élastiques variables permettent de compenser des variations de la largeur de l'espace de séparation entre les tubes 4, cette largeur dépendant des tolérances de fabrication des tubes qui peuvent être plus ou moins ovalisés au moment de leur coudage pour réaliser le cintre et qui peuvent présenter de légères différences de diamètre. En outre, la disposition des tubes suivant des rangées parallèles n'est qu'approximative et on peut observer certaines variations de l'espacement entre les rangées de tubes.

L'action combinée des barres antivibratoires suivant l'invention dont l'épaisseur à l'état dilaté est fixe et parfaitement définie et des barres élastiques 25 évidées, permet de compenser des variations de la largeur de l'espace de séparation des rangées de tubes dans lequel on réalise le calage antivibratoire des cintres 4c.

Sur la figure 1, les barres 15 et 25 sont disposées les unes à la suite des autres dans des plans de section droite du faisceau au niveau des cintres, c'est-à-dire dans des plans de direction radiale par rapport aux cintres.

Il peut être préférable d'adopter une disposition telle que représentée sur la figure 13 où les barres 15 et 25 sont disposées en quinconce, d'un espace de séparation entre les rangées de tubes au suivant, c'est-à-dire dans des plans de section droite du faisceau 2 au niveau des cintres 4c, distincts et disposés les uns par rapport aux autres avec un même écart angulaire.

Les barres antivibratoires 15 suivant l'invention et les barres élastiques 25 peuvent être disposées dans les espaces successifs entre les rangées de tubes, alternativement, les barres 15 selon l'invention et les barres élastiques 25 occupant un espace sur deux. On peut également disposer les barres élastiques suivant plusieurs espaces successifs entre les rangées de tubes, les barres 15 dilatables suivant l'invention occupant les espaces restants, toutes les n nappes de tubes 4. Les tubes 4 de ces n nappes successives sont séparées par des barres élastiques 25.

Dans tous les cas, les barres 15 et 25 peuvent être disposées en V et reliées de façon articulée à leur sommet commun.

On voit que le dispositif suivant l'invention permet de mettre en place facilement et rapidement des barres antivibratoires dont la dilatation pour réaliser le calage des tubes se produit automatiquement, au moment de la mise à la température de service du générateur de vapeur. De plus, la dilatation transversale de la barre antivibratoire se produit sans déplacement longitudinal relatif des deux éléments 20, 21.

L'invention ne se limite pas aux modes de réalisation qui ont été décrits.

Dans le cas des modes de réalisation qui ont été décrits, le déplacement des parties constituantes de la barre et la dilatation de cette barre dans le sens transversal sont accrus par le fait qu'ils sont obtenus à partir d'une déformation longitudinale qui peut être de plus grande amplitude ou encore à partir d'une flexion d'une lame courbe qui peut être de grande longueur.

On peut évidemment concevoir d'autres modes de réalisation de pièces en alliage à mémoire de forme pour réaliser un déplacement transversal relatif de deux parties d'une barre antivibratoire.

## Revendications

1. Dispositif de calage antivibratoire de tubes (4) du faisceau (2) d'un générateur de vapeur d'un réacteur nucléaire à eau sous pression, constitué par au moins une barre antivibratoire (15) destinée à être intercalée entre deux rangées successives de tubes (4) du générateur de vapeur, dans une zone où ces tubes ont la forme de cintres (4c) circulaires, la barre antivibratoire comportant deux pièces profilées (20, 21) de forme allongée assemblées de façon à présenter une certaine latitude de déplacement relatif, dans au moins une direction, caractérisé par le fait que les deux pièces profilées (20, 21) ménagent entre elles une pluralité de logements successifs dans leur direction longitudinale dans chacun desquels est placée une pièce (22) en alliage à mémoire de forme intercalée entre les deux pièces profilées (20, 21).

2. Dispositif de calage suivant la revendication 1, caractérisé par le fait que chacune des pièces en alliage à mémoire de forme (22) a la forme d'une lame courbe se déformant par flexion entre sa première et sa seconde configuration.

3. Dispositif de calage suivant la revendication 1, caractérisé par le fait que chacune des pièces (22) intercalée entre les deux pièces profilées (20) et (21) a la forme d'une lame sensiblement parallélépipédique comportant deux faces inclinées par rapport aux faces de la lame ou rampes à ses extrémités longitudinales coopérant avec des faces inclinées de l'une au moins des deux pièces (20, 21) et se déforme dans la direction longitudinale entre sa première et sa seconde configurations, le déplacement longitudinal de la lame entre sa première et sa seconde configurations étant transformé en un déplacement transversal de l'une au moins des deux pièces (20) et (21) par rapport à l'autre, par les rampes.

4. Dispositif de calage suivant la revendication 3, caractérisé par le fait que la déformation longitudinale de la pièce (22), entre sa première et sa seconde configurations est une dilatation.

5. Dispositif de calage suivant la revendication 3, caractérisé par le fait que la déformation de la pièce (22) entre sa première et sa seconde configurations est une rétraction longitudinale.

6. Dispositif de calage suivant l'une quelconque des revendications 1 à 5, caractérisé par le fait que l'une au moins des pièces profilées (20, 21) est flexible dans une direction perpendiculaire à la direction longitudinale de la barre antivibratoire.

7. Dispositif de calage suivant l'une quelconque des revendications 1 à 6, caractérisé par le fait que l'une au moins des pièces profilées (20, 21) est constituée de plusieurs tronçons successifs dans la direction longitudinale de la barre antivibratoire (15).

8. Dispositif de calage suivant l'une quelconque des revendications 1 à 7, caractérisé par le fait que l'une des pièces profilées (20) comporte une section creuse et l'autre pièce (21) une section pleine de forme correspondante, permettant l'assemblage de ces deux pièces avec une latitude de déplacement relatif transversal.

9. Dispositif de calage antivibratoire des tubes (4) d'un générateur de vapeur disposés suivant des rangées ou nappes successives séparées par un espace sensiblement constant caractérisé par le fait qu'il comporte à la fois des barres antivibratoires (15) dilatables selon l'une quelconque des revendications 1 à 8 et de simples barres d'espacement métalliques (25), dans des espaces successifs de façon alternée.

10. Dispositif selon la revendication 9, caractérisé en ce que les barres d'espacement métalliques (25) sont des barres évidées élastiques.

11. Dispositif de calage suivant l'une des revendications 9 et 10, caractérisé par le fait que les barres (15, 25) sont disposées les unes à la suite des autres dans des plans de section droite du faisceau de tubes (2).

12. Dispositif de calage suivant l'une des revendications 9 et 10, caractérisé par le fait que les barres antivibratoires (15, 25) sont disposées en quinconce, c'est-à-dire dans des plans de section droite du faisceau différents, dans les espaces successifs entre les rangées de tubes (4).

**Patentansprüche**

1. Vorrichtung zum schwingungsneutralen Verkeilen von Rohren (4) des Bündels (2) eines Dampferzeugers eines Druckwasserkernreaktors, gebildet aus wenigstens einem schwingungsneutralisierenden Balken (15), der dazu bestimmt ist, zwischen zwei aufeinanderfolgende Reihen von Rohren (4) des Dampferzeugers gesetzt zu werden, in eine Zone, wo diese Rohre die Form von kreisförmigen Bögen (4c) aufweisen, wobei der schwingungsneutralisierende Balken zwei profilierte Teile (20, 21) von länglicher Form aufweist, die derart zusammengesetzt sind, daß sie einen relativen Bewegungsspielraum in wenigstens eine Richtung aufweisen, **dadurch gekennzeichnet,** daß die beiden profilierten Teile (20, 21) untereinander eine Mehrzahl von aufeinanderfolgenden Aufnahmen in ihrer Längsrichtung ausbilden, in denen jeweils ein Teil (22) aus Metall mit Formerinnerungsvermögen angeordnet ist, das zwischen den beiden profilierten Teilen (20, 21) eingeklemmt ist.

2. Verkeilungsvorrichtung nach Anspruch 1, **dadurch gekennzeichnet,** daß ein jedes der Teile aus Metall mit Formerinnerungsvermögen (22) die Form eines gebegenen Blattes aufweist, das sich durch Biegung zwischen seiner ersten und zweiten Ausbildung verformt.

3. Verkeilungsvorrichtung nach Anspruch 1, **dadurch gekennzeichnet,** daß ein jedes der zwischen die beiden profilierten Teile (20) und (21) eingeklemmtes Teil (22) die Form eines im wesentlichen parallelepipedischen Blattes aufweist, mit zwei bezüglich den Seiten des Blattes geneigten Seiten oder Rampen, an seinen Längsenden, die mit den geneigten Seiten zusammenwirken von wenigstens einem der beiden Teile (20, 21) und sich in Längsrichtung zwischen seiner ersten und seiner zweiten Gestalt verformt, wobei die Längsbewegung des Blattes zwischen seiner ersten und zweiten Gestalt in eine Querbewung von wenigstens einem der beiden Teile (20) und (21) bezüglich des anderen, durch die Rampen übertragen wird.

4. Verkeilungsvorrichtung nach Anspruch 3, **dadurch gekennzeichnet,** daß die Längsverformung des Teiles (22) zwischen seiner ersten und seiner zweiten Gestalt eine Dilatation ist.

5. Verkeilungsvorrichtung nach Anspruch 3, **dadurch gekennzeichnet,** daß die Verformung des Teils (22) zwischen seiner ersten und seiner zweiten Gestalt ein Längszurückziehen ist.

6. Verkeilungsvorrichtung nach einem der Ansprüche 1 bis 5, **dadurch gekennzeichnet,** daß wenigstens eines der profilierten Teile (20, 21) in eine Richtung biegsam ist, die senkrecht zur Längsrichtung des schwingungsneutralisierenden Balkens ist.

7. Verkeilungsvorrichtung nach einem der Ansprüche 1 bis 6, **dadurch gekennzeichnet,** daß wenigstens eines der profilierten Teile (20, 21) aus mehreren in die Längsrichtung des schwingungsneutralisierenden Balkens (15) aufeinanderfolgenden Teilstücken gebildet wird.

8. Verkeilungsvorrichtung nach einem der Ansprüche 1 bis 7, **dadurch gekennzeichnet,** daß eines der profilierten Teile (20) einen hohlen Abschnitt aufweist, und das andere Teil (21) einen vollen Abschnitt von entsprechender Form aufweist, was das Zusammenfügen dieser beiden Teile mit einem relativen Querbewegungsspielraum erlaubt.

9. Schwingungsneutralisierende Verkeilungsvorrichtung von Rohren (4) eines Dampferzeugers, die entlang von aufeinanderfolgenden Reihen oder Bahnen angeordnet sind, getrennt durch einen im wesentlichen konstanten Zwischenraum, **dadurch gekennzeichnet,** daß sie gleichzeitig versetzbare schwigungsneutralisierende Balken (15), nach einem der Ansprüche 1 bis 8 und einfache metllische Abstandsbalken (25) in aufeinanderfolgenden Zwischenräumen auf abwechselnde Weise aufweist.

10. Vorrichtung nach Anspruch 9, **dadurch gekennzeichnet,** daß die metallischen Abstandsbalken (25) elastische hohle Balken sind.

11. Verkeilungsvorrichtung nach einem der Ansprüche 9 oder 10, **dadurch gekennzeichnet,** daß die Balken (15, 25) nacheinander in Querschnittsebenen des Rohrbündels (2) angeordnet sind.

12. Verkeilungsvorrichtung nach einem der Ansprüche 9 oder 10, **dadurch gekennzeichnet,** daß die schwingungsneutralisierenden Balken (15, 25) versetzt angeordnet sind, d.h. in unterschiedlichen Querschnittsebenen des Bündels, in den aufeinanderfolgenden Zwischenräumen zwischen den Reihen der Rohre (4).

## Claims

1. Device for the antivibratory wedging of tubes (4) of the stack (2) of a steam generator of a pressurised water nuclear reactor, comprising at least one antivibratory bar (15) intended to be interposed between two successive rows of tubes (4) of the steam generator, in a zone in which said tubes are in the form of circular arches (4c), said antivibratory bar having two sectional members (20, 21) of elongated shape mounted so as to provide a certain width for relative displacement in at least one direction, characterised in that the two sectional members (20, 21) provide between them a plurality of successive cavities in their longitudinal direction, in each of which cavities a member (22) of shape memorising alloy is placed in between said two sectional members (20, 21).

2. Wedging device according to claim 1, characterised in that each of the members of shape memorising alloy (22) is in the form of a curved strip deformable by deflection between its first and its second configuration.

3. Wedging device according to claim 1, characterised in that each of the members (22) inserted between the two sectional members (20) and (21) is in the form of a substantially parallelepipedic strip having two faces inclined relative to the faces of the strip or slopes at its longitudinal ends cooperating with the inclined faces of at least one of the two members (20, 21) and that said member is deformed in the longitudinal direction between its first and its second configuration, the longitudinal displacement of the strip between its first and its second configuration being converted into a transverse displacement of at least one of the two members (20) and (21), in relation to the other, by said slopes.

4. Wedging device according to claim 3, characterised in that the longitudinal displacement of the member (22) between its first and its second configuration is an expansion.

5. Wedging device according to claim 3, characterised in that the deformation of the member (22) between its first and its second configuration is a longitudinal retraction.

6. Wedging device according to any one of claims 1 to 5, characterised in that at least one of the sectional members (20, 21) is flexible in a direction at right angles to the longitudinal direction of the antivibratory bar.

7. Wedging device according to any one of claims 1 to 6, characterised in that at least one of the sectional members (20, 21) comprises several successive sections in the longitudinal direction of the antivibratory bar (15).

8. Wedging device according to any one of claims 1 to 7, characterised in that one of the sectional members (20) has a hollow section and the other (21) a solid section of corresponding shape, thus enabling these two members to be joined together with relative transverse displacement.

9. Device for the antivibratory wedging of tubes (4) of a steam generator which are arranged in successive rows or layers separated by a substantially constant spacing, characterised in that it comprises not only expandable antivibratory bars (15) according to any one of claims 1 to 8, but also simple metal spacing bars (25) disposed alternatively in successive spacings.

10. Device according to claim 9, characterised in that the metallic spacing bars (25) are resilient hollow bars.

11. Wedging device according to either claim 9 or 10, characterised in that the bars (15, 25) are disposed one following the other in cross-sectional planes of the stack of tubes (2).

12. Wedging device according to either claim 9 or 10, characterised in that the antivibratory bars (15, 25) are disposed in a staggered arrangement, that is to say in different cross-sectional planes of the stack, in the successive spaces between the rows of tubes (4).

FIG.1

FIG.3A

FIG.3B

FIG.3'A

FIG.3

FIG.2

## FIG.4A

## FIG.4B

## FIG.4

FIG.5A

FIG.5B

FIG.5

FIG. 6A

FIG.6B

FIG.6C

FIG.6

FIG.7

FIG.7A

FIG.7B

FIG.7C

FIG.8A

FIG.8B

FIG.8C

FIG.8

FIG.9

21

4

C          C

B          B

22α       22

A          A

21'

22α       22

FIG.9A

21

FIG.9B

20

FIG.9C

20

FIG.10

FIG.10A

FIG.10B

FIG.10C

FIG.10D

**FIG.12**

**FIG.11**

**FIG.13**